# EUROPÄISCHE PATENTSCHRIFT

(11) **EP 0 492 301 B1**
(45) Veröffentlichungstag und Bekanntmachung des Hinweises auf die Patenterteilung: **31.07.1996**
(21) Anmeldenummer: 91121315.5
(22) Anmeldetag: 12.12.1991
(51) Int. Cl.: C08F 265/06, C08F 265/04, C08F 2/22, C08L 27/06

(54) **Zweistufiges Emulsionscopolymerisat**
Two-stage emulsion copolymer
Copolymère préparé en émulsion en deux étapes

(30) Priorität: 21.12.1990 DE 4041186
(43) Veröffentlichungstag der Anmeldung: 01.07.1992
(73) Patentinhaber: BASF Aktiengesellschaft, 67063 Ludwigshafen (DE)
(72) Erfinder: Goertz, Hans-Helmut, Dr., W-6713 Freinsheim (DE); Hungenberg, Klaus-Dieter, Dr., W-6943 Birkenau (DE); Hatzmann, Guenter, Dr., W-6906 Leimen (DE)

(56) Entgegenhaltungen:
- EP-A- 0 030 590
- EP-A- 0 306 894
- EP-A- 0 392 465
- EP-A- 0 450 511
- DE-A- 2 414 561
- DE-C- 2 135 024

## Beschreibung

Die Erfindung betrifft ein zweistufiges Emulsionscopolymerisat, erhältlich durch
A) Emulsionspolymerisation von
   31 bis 65 Gew.-% eines Monomerengemisches aus
   a₁) 40 bis 80 Gew.-% eines C₁-C₁₈-Alkylacrylats,
   a₂) 20 bis 60 Gew.-% Methylmethacrylat und
   a₃) 0 bis 20 Gew.-% eines weiterend nicht vernetzend wirkenden Comonomeren und
B) anschließender Emulsionspolymerisation in Gegenwart des nach Stufe A) erhaltenen Emulsionscopolymerisats von
   35 bis 69 Gew.-% eines Monomerengemisches aus
   b₁) 25 bis 90 Gew.-% eines C₁-C₄-Alkylmethacrylats,
   b₂) 10 bis 75 Gew.-% eines vinylaromatischen Monomeren und
   b₃) 0 bis 65 Gew.-% eines weiteren nicht vernetzend wirkenden Comonomeren,
wobei sich die Gewichtsprozente der in Stufen A) und B) eingesetzten Monomerengemische auf das Emulsionscopolymerisat beziehen und sich auf 100 Gew.-% addieren.

Weiterhin betrifft die Erfindung thermoplastische Formmassen, welche das oben genannte, zweistufige Emulsionscopolymerisat enthalten, sowie die Verwendung des zweistufigen Emulsionscopolymerisats als Verarbeitungshilfsmittel.

Zur Verbesserung der Verarbeitbarkeit werden Polyvinylchloridformmassen in der Regel polymere Hilfsmittel zugesetzt, die beispielsweise das Gelier-und Plastifizierverhalten der Formmassen beeinflussen. Bei der Herstellung von Folien durch Kalandrierung soll durch den Zusatz von Verarbeitungshilfsmitteln vor allem auch eine leichte Ablösung von den Kalanderwalzen bewirkt und die Bildung von Belägen vermieden werden.

Polymere Verarbeitungshilfsmittel für Polyvinylchlorid werden z.B. in der EP-A-208 585, FR-A-2 557 573 und EP-A-195 522 beschrieben.

Zweistufig aufgebaute Verarbeitungshilfsmittel sind bereits aus der DE-B-2 414 561 und der DE-B-2 363 564 bekannt. Bei dem Verarbeitungshilfsmittel aus der DE-B-2 414 561 enthält die erste Stufe 80 bis 100 Gew.-% Methylmethacrylat und die zweite Stufe ein Gemisch aus 30 bis 80 Gew.-% Styrol und 20 bis 70 Gew.-% Alkyl(meth)acrylaten. Das Verarbeitungshilfsmittel der DE-B-2 363 564 besteht in der ersten Stufe aus überwiegend Methylmethacrylat und in der zweiten Stufe aus 55 bis 90 Gew.-% Methylmethacrylat sowie 10 bis 45 Gew.-% eines Alkylacrylats.

In der DE-C-2 135 024 wird ein zweistufig aufgebautes polymeres Verarbeitungshilfsmittel vorgeschlagen, welches in der ersten Stufe Alkylacrylate enthält. Das aus der FR-A-2 180 595 bekannte Verarbeitungshilfsmittel besteht aus 1 bis 30 Gew.-% einer ersten Stufe aus überwiegend Alkylacrylaten und 99 bis 70 Gew.-% einer zweiten Stufe mit einer Glasübergangstemperatur über 25°C.

Die bisher bekannten Verarbeitungshilfsmittel wiesen entweder beim Plastifizierverhalten oder bei der Trennwirkung (Ablöseverhalten, Belagbildung auf Kalanderwalzen) Schwächen auf. Aufgabe der vorliegenden Erfindung war es daher, Hilfsmittel zur Verfügung zu stellen, welche bei der Verarbeitung von Polyvinylchloridformmassen durch Kalandrierung sowohl eine gute Plastifizierwirkung wie auch eine gute Trennwirkung gewährleisten.

Demgemäß wurden die oben genannten Emulsionscopolymerisate und ihre Verwendung als Verarbeitungshilfsmittel gefunden.

Bei dem erfindungsgemäßen Emulsionscopolymerisat handelt es sich um ein zweistufig aufgebautes Polymerisat, welches durch Polymerisation von Monomerengemischen in zwei Stufen A und B erhältlich ist.

In einer bevorzugten Ausführung beträgt der Gewichtsanteil des in der Stufe A) eingesetzten Monomerengemischs 40 bis 60 Gew.-%.

Der Gewichtsanteil des in der Stufe B) eingesetzten Monomerengemischs beträgt bevorzugt 40 bis 60 Gew.-%.

Die Gewichtsanteile der in den Stufen A und B eingesetzten Monomerengemische beziehen sich auf das Emulsionscopolymerisat und addieren sich zu 100 Gew.-%.

Das Monomerengemisch der Stufe A setzt sich bevorzugt zusammen aus
a₁) 45 bis 75 Gew.-% eines C₁-C₁₈-Alkylacrylats,
a₂) 25 bis 55 Gew.-% Methylmethacrylat und
a₃) 0 bis 20 Gew.-% eines weiteren Comonomeren.

Das Monomerengemisch der Stufe B setzt sich bevorzugt zusammen aus
b₁) 35 bis 75 Gew.-% eines C₁-C₄-Alkylmethacrylats,
b₂) 25 bis 65 Gew.-% eines vinylaromatischen Monomeren und
b₃) 0 bis 65 Gew.-% eines weiteren Comonomeren.

Unter den Alkylacrylaten sind die C₁-C₁₂-, insbesondere die C₁-C₈-Alkylacrylate, z.B. Methylacrylat, Ethylacrylat, n-Butylacrylat, 2-Ethylhexylacrylat, von besonderer Bedeutung.

Unter den C₁-C₄-Alkylmethacrylaten ist Methylmethacrylat bevorzugt.

Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol.

Besonders bevorzugt ist Styrol.

Bei den weiteren Comonomeren handelt es sich um nicht vernetzend wirkende einfach ungesättigte Monomere.

In Betracht kommen z.B. ungesättigte Nitrilverbindungen, Vinylether wie Vinylisobutylether sowie Vinylester wie Vinylacetat oder Vinylpropionat. Insbesondere geeignet als Comonomere in Stufe B) sind Acrylnitril und Methacrylnitril.

Der Einsatz weiterer Comonomere ist für eine Verbesserung des Verarbeitungsverhaltens nicht notwendig, kann jedoch in einigen Fällen vorteilhaft sein.

Die Herstellung der Emulsionscopolymerisate erfolgt durch Emulsionspolymerisation in an sich bekannter Weise.

Als Emulgatoren dienen z.B. Natrium-, Kalium- oder Ammoniumsalze von gesättigten oder ungesättigten C₈-C₂₀-Fettsäuren wie Laurinsäure, Stearinsäure, Palmitinsäure, Ölsäure u.a., C₈-C₂₀-Alkylsulfonsäuren, Schwefelsäure-C8-C20-alkylester, Alkylbenzolsulfonsäuren, Abietinsäure und deren Derivate, Sulfobernsteinsäurealkylester, alkylierte Diphenylethersulfonsäuren.

Durch die Wahl von Art und Menge des Emulgators kann in bekannter Weise die Teilchengröße der Emulsion eingestellt werden. Sie kann im allgemeinen im im Bereich von 50 bis 300 nm liegen. Bevorzugt liegt sie im Bereich von 70 bis 250 nm, besonders bevorzugt zwischen 70 und 200 nm.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, tert.-Butylhydroperoxid, tert.-Butylperacetat in Kombination mit Reduktionsmitteln wie Natriumformaldehydsulfoxylat oder Ascorbinsäure in Gegenwart von Eisensalzen in Frage. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der Stufe A) polymerisiert. Danach werden die Monomeren der Stufe B) zur nach der Polymerisation der Monomeren der Stufe A) erhaltenen wäßrigen Emulsion gegeben. Die Monomeren in den einzelnen Stufen werden zu mehr als 70 Gew.-%, bevorzugt zu mehr als 95 Gew.-%, besonders bevorzugt zu mehr als 99 Gew.-% auspolymerisiert, bevor mit der Zugabe der Monomeren einer weiteren Stufe begonnen wird.

Der Feststoffgehalt der Emulsionen beträgt bevorzugt 30 bis 60 Gew.-%.

Der K-Wert nach Fikentscher (Cellulosechemie Band 13, S. 48 bis 64 und 71 bis 74 (1932) gemessen in Tetrahydrofuran (0,5 g Polymer in 100 ml) liegt bevorzugt zwischen 60 und 140, besonders bevorzugt zwischen 80 und 120.

Das Emulsionscopolymerisat kann aus der Emulsion in bekannter Weise z.B. durch Fällung oder Sprühtrocknung isoliert und mit einem Thermoplasten und gegebenenfalls weiteren Zusatzstoffen wie Stabilisatoren, Gleitmitteln, Füllstoffen, Farbstoffen, Pigmenten oder weiteren Modifizierungmitteln zur Verbesserung der Transparenz, Witterungsbeständigkeit, Wärmeformbeständigkeit, Schlagzähigkeit etc. nach bekannten Verfahren in Extrudern, Knetern oder Walzen gemischt werden.

Die erfindungsgemäßen thermoplastischen Formmassen enthalten 0,1 bis 30, insbesondere 0,5 bis 20 Gew.-% des erfindungsgemäßen Emulsionscopolymerisats.

Durch die Emulsionscopolymerisate wird die Verarbeitbarkeit der thermoplastischen Formmassen, insbesondere derjenigen auf Basis von Polyvinylhalogeniden, verbessert.

Bevorzugt sind daher Polyvinylhalogenidformmassen, enthaltend

0,1 bis 30 Gew.-%, vorzugsweise 0,3 bis 10 Gew.-% des Emulsionscopolymerisats.

Als Polyvinylhalogenid sind vor allem Homo- und Copolymere des Vinylchlorids mit mindestens 80 Gew.-% Vinylchlorideinheiten oder nachchloriertes Polyvinylchlorid geeignet.

Besonders bevorzugt ist Polyvinylchlorid.

Bei der Herstellung von Folien aus Polyvinylhalogenidformmassen durch Kalandrierung bewirkt das erfindungsgemäße zweistufige Emulsionscopolymerisat eine leichte Ablösung der Folien von den Kalanderwalzen; eine Belagsbildung auf den Kalanderwalzen wird im wesentlichen nicht beobachtet. Gleichzeitig wird eine gute Plastifizierung der Polyvinylhalogenidformmassen erreicht.

### Beispiel

### Herstellung der Emulsionscopolymerisate

### Emulsionscopolymerisat 1

In einer 6 1 fassenden Rührapparatur, die mit entsprechenden Zulaufeinrichtungen ausgestattet ist, wurden in 1020 ml Wasser folgende Substanzen gelöst: 18 mg Eisen-II-sulfat, 2,2 g tert.Butylhydroperoxid und 0,28 g des Natriumsalzes eines Alkylsulfonates mit einer mittleren Kettenlänge von 14 Kohlenstoffatomen.

Als Zulaufmischung 1 diente eine Lösung von 7,9 g Natriumhydroxymethansulfinat in 280 g Wasser, als Zulaufmischung 2 eine Emulsion aus 249,5 g Ethylhexylacrylat, 305 g Methylmethacrylat, 5,6 g Emulgator (s.o) und 1020 g Wasser.

Zur Vorlage wurden 7 % der Zulaufmischung 2 gegeben und dann unter Rühren und Begasung mit Stickstoff auf 65°C aufgeheizt. Nach Erreichen dieser Temperatur wurde mit der Dosierung der Zulaufmischungen 1 und 2 begonnen. Zulauf 1 wurde in 5 h, Zulauf 2 in 2 h zudosiert. Nach Ende von Zulauf 2 wurde 1/2 h weitergerührt. Dann wurden 4,2 g tert.Butylhydroperoxid und 10,3 Emulgator (s.o.) in 65 g Wasser zugegeben und anschließend eine Mischung aus 618 g Methylmethacrylat und 412 g Styrol in 2 h zudosiert. Nach weiteren 1 1/2 h Rühren bei 65°C wurde abgekühlt. Die erhaltene Dispersion hatte einen Feststoffgehalt von 39,4 % und einen pH-Wert von 2.8. Aus der Dispersion wurde das Festprodukt durch Gefrierfällung und anschließende Trocknung im Vakuum gewonnen. Der K-Wert des Produktes betrug 98.

In entsprechender Weise wurden die Emulsionscopolymerisate 2 bis 5 sowie a und b (zum Vergleich) hergestellt (s. Tab. 1).

**Tabelle 1:**

| Aufbau und K-Wert der Emulsionscopolymerisate (Zahlenangaben in Gewichtsprozent) | | | | | |
|---|---|---|---|---|---|
| Beispiel | Stufe A) | | Stufe B) | | K-Wert |
| | Anteil | Aufbau | Anteil | Aufbau | |
| 1 | 35 | 45 EHA/55 MMA | 65 | 60 MMA/40 S | 98 |
| 2 | 50 | 66 BA/34 MMA | 50 | 50 MMA/50 S | 102 |
| 3 | 45 | 70 EHA/30 MMA | 55 | 55 MMA/45 S | 113 |
| 4 | 60 | 55 BA/45 MMA | 40 | 80 MMA/20 S | 104 |
| 5 | 55 | 75 BA/25 MMA | 45 | 70 MMA/30 S | 111 |
| a* | 10 | 38.4 BA/57.6 S/ | 90 | 54 MMA/46 S | 128 |
| | | 0.4 EA/3.6MMA | | | |
| b** | 60 | 60 S/40 BA | 40 | 90 MMA/10 EA | 72 |

| | | | | | |
|---|---|---|---|---|---|
| * s. Beispiel 1 in FR 21 80 595 | | | | | |
| ** s. Beispiel IVB in DE 21 35 024 | | | | | |

Abkürzungen:
- MMA:: Methylmethacrylat; BA: n-Butylacrylat;
- EHA:: 2-Ethylhexylacrylat; EA: Ethylacrylat;
- S:: Styrol

### Prüfung des Verarbeitungsverhaltens

Zur Prüfung des Verarbeitungsverhaltens wurden drei verschiedene Tests durchgeführt: ein Walztest auf einem Laborwalzwerk, eine Brabender-Prüfung, sowie eine Kalanderprüfung.

### Walztest

Die Prüfung des Walzverhaltens erfolgte auf einem Laborwalzwerk (Walzen spiegelnd verchromt), Durchmesser 10 cm, Walzenbreite 22,5 cm) bei 180°C. Die Drehzahl der vorderen Walze betrug 13 U/min, die der hinteren Walze 12 U/min. Als Prüfmischung diente eine Mischung aus 100 g S-PVC (K-Wert 60), 1 g Zinn-Stabilisator (Octylzinnthioglykolester) und 0,5 g des jeweiligen Copolymerisates. Die Mischung wurde auf dem Walzwerk gewalzt und alle 5 min die Ablösbarkeit geprüft. Der Versuch wurde beendet, wenn sich das Walzfell nicht mehr einwandfrei von der Walze abziehen ließ, spätestens jedoch nach 30 min.

### Brabenderprüfung

In einem Heißmischer wurde zunächst eine Grundmischung aus 100 Gew.-Teilen S-PVC (K-Wert 68), 1 Gew.-Teil tribasischem Bleisulfat, 0,3 Gew.-Teilen Bleistearat, 0,6 Gew.-Teilen C₁₆-C₁₈-Fettalkohol und 0,1 Gew.-Teilen Calciumstearat hergestellt.

Die Prüfung des Verarbeitungsverhaltens erfolgte dann in einem Brabender-Plasticorder (Typ W 30 H) mit einem Knetkammervolumen von 30 cm³.

Es wurden jeweils 31 g Mischung eingesetzt, die durch Untermischen von 0,3 g Copolymer in 30,7 g Grundmischung hergestellt wurde.

Geprüft wurde das Verarbeitungsverhalten bei 170°C und einer Drehzahl von 40 U/min der rechtsdrehenden Schaufel. Das Drehzahlverhältnis der links- und rechtsdrehenden Kneterschaufeln betrug 1,5:1. Mit Hilfe eines Schreibers wurde der Verlauf des Drehmomentes während des Versuchs aufgezeichnet und aus der Kurve die Plastifizierzeit (Maximum) entnommen.

### Kalanderprüfung

Die Prüfung erfolgte auf einem 4-Walzen-I-Kalander (Walzenbreite 800 mm, Walzendurchmesser 400 mm). Zur Vorplastifizierung diente ein Planetwalzenextruder (PWE 100).

Zur Verarbeitung gelangte eine Mischung aus 100 Gew.-Teilen S-PVC (K-Wert 61), 1 Gew.-Teil Zinnstabilisator (Octylzinnmercaptid), 1 Gew.-Teil Glycerindioleat als innerem und 0,2 Teilen Montanesterwachs (E-Wachs BASF) als äußerem Gleitmittel sowie 1 Teil des jeweiligen Copolymerisates.

### Beurteilt wurden:

- das Plastifizierverhalten der Mischung im Planetwalzenextruder (Plastifiziergrad, Anteil an nicht aufgeschmolzenem Pulver); Note 1 bis 6 (1: sehr gute Plastifizierung; 6: keine Plastitifzierung)
- das Ablöseverhalten der Folie von den Kalanderwalzen (insbesondere von der letzten Walze); Note 1 bis 6 (1: ausgezeichnete Trennwirkung; 6: starkes Kleben)
- die optische Qualität der Folie; hier wurden insbesondere die Kriterien Oberflächengüte (z.B. Glanz), Fließlinien, Fehlstellen (z.B. Luftblasen) visuell beurteilt und der Gesamteindruck in einer Notenskala von 1 bis 6 eingestuft

**Tabelle 2**

| Beurteilung des Verarbeitungsverhaltens | | | | | |
|---|---|---|---|---|---|
| Beispiel | Laborwalze Zeit bis zum Festkleben [min] | Brabender Plastifizierzeit [sec] | Plastifizierung [Note] | Kalander Ablöseverhalten [Note] | optische Qualität d. Folien [Note] |
| 1 | > 30 | 230 | 2 | 2 | 2 |
| 2 | > 30 | 380 | 2 | 1 | 1-2 |
| 3 | > 30 | 370 | 2 | 1 | 2 |
| 4 | > 30 | 160 | 1 | 2 | 2 |
| 5 | > 30 | 210 | 2 | 1-2 | 1-2 |
| a | 30 | 240 | 2-3 | 2-3 | 1 |
| b | > 30 | 465 | 3 | 1 | 2-3 |

## Patentansprüche (Patentansprüche für folgende(n) Vertragsstaat(en): BE, DE, FR, GB, IT, NL)

1. Zweistufiges Emulsionscopolymerisat, erhältlich durch
A) Emulsionspolymerisation von
31 bis 65 Gew.-% eines Monomerengemisches aus
a₁) 40 bis 80 Gew.-% eines C₁-C₁₈-Alkylacrylats,
a₂) 20 bis 60 Gew.-% Methylmethacrylat und
a₃) 0 bis 20 Gew.-% eines weiteren, nicht vernetzend wirkenden Comonomeren und
B) anschließender Emulsionspolymerisation in Gegenwart des nach Stufe A) erhaltenen Emulsionscopolymerisats von
35 bis 69 Gew.-% eines Monomerengemisches aus
bis 25 bis 90 Gew.-% eines C₁-C₄-Alkylmethacrylats,
b₂) 10 bis 75 Gew.-% eines vinylaromatischen Monomeren und
b₃) 0 bis 65 Gew.-% eines weiteren, nicht vernetzend wirkenden Comonomeren,
wobei sich die Gewichtsprozente der in Stufen A) und B) eingesetzten Monomerengemische auf das Emulsionscopolymerisat beziehen und sich auf 100 Gew.-% addieren.

2. Thermoplastische Formmassen, enthaltend 0,1 bis 30 Gew.-% des zweistufigen Emulsionscopolymerisats gemäß Anspruch 1.

3. Polyvinylhalogenidformmassen, enthaltend 0,1 bis 30 Gew.-% des zweistufigen Emulsionscopolymerisats gemäß Anspruch 1.

4. Verwendung des zweistufigen Emulsionscopolymerisats gemäß Anspruch 1 als Verarbeitungshilfsmittel für Polyvinylhalogenidformmassen.

5. Verwendung des zweistufigen Emulsionscopolymerisats gemäß Anspruch 1 als Verarbeitungshilfsmittel für Polyvinylhalogenidformmassen bei der Kalandrierung.

6. Formteile, erhältlich aus thermoplastischen Formmassen gemäß Anspruch 2 oder 3.

7. Formteile, erhältlich unter Verwendung des Emulsionscopolymerisats als Verarbeitungshilfsmittel gemäß Anspruch 5 oder 6.

## Patentansprüche (Patentansprüche für folgende(n) Vertragsstaat(en): ES)

1. Verfahren zur Herstellung eines zweistufigen Emulsionscopolymerisates, durch
A) Emulsionspolymerisation von
31 bis 65 Gew.-% eines Monomerengemisches aus
a₁) 40 bis 80 Gew.-% eines C₁-C₁₈-Alkylacrylats,
a₂) 20 bis 60 Gew.-% Methylmethacrylat und
a₃) 0 bis 20 Gew.-% eines weiteren, nicht vernetzend wirkenden Comonomeren und
B) anschließender Emulsionspolymerisation in Gegenwart des nach Stufe A) erhaltenen Emulsionscopolymerisats von
35 bis 69 Gew.-% eines Monomerengemisches aus
b₁) 25 bis 90 Gew.-% eines C₁-C₄-Alkylmethacrylats,
b₂) 10 bis 75 Gew.-% eines vinylaromatischen Monomeren und
b₃) 0 bis 65 Gew.-% eines weiteren, nicht vernetzend wirkenden Comonomeren,
wobei sich die Gewichtsprozente der in Stufen A) und B) eingesetzten Monomerengemische auf das Emulsionscopolymerisat beziehen und sich auf 100 Gew.-% addieren.

2. Verwendung des zweistufigen Emulsionscopolymerisats gemäß Anspruch 1 als Verarbeitungshilfsmittel für Polyvinylhalogenidformmassen.

3. Verwendung des zweistufigen Emulsionscopolymerisats gemäß Anspruch 1 als Verarbeitungshilfsmittel für Polyvinylhalogenidformmassen bei der Kalandrierung.

## Claims (Claims for the following Contracting State(s): BE, DE, FR, GB, IT, NL)

1. A two-step emulsion copolymer, obtainable by
A) emulsion polymerization of from 31 to 65 % by weight of a monomer mixture comprising
a1) from 40 to 80 % by weight of a C₁-C₁₈-alkyl acrylate,
a2) from 20 to 60 % by weight of methyl methacrylate and
a3) from 0 to 20 % by weight of a further, non-crosslinking comonomer, and
B) subsequent emulsion polymerization, in the presence of the emulsion copolymer obtained in A), of from 35 to 69 % by weight of a monomer mixture comprising
b1) from 25 to 90 % by weight of a C₁-C₄-alkyl methacrylate,
b2) from 10 to 75 % by weight of a vinylaromatic monomer and
b3) from 0 to 65 % by weight of a further, non-crosslinking comonomer,
the percentages by weight of the monomer mixtures employed in steps A) and B) being based on the emulsion copolymer and adding up to 100 % by weight.

2. A thermoplastic molding material, containing from 0.1 to 30 % by weight of a two-step emulsion copolymer as claimed in claim 1.

3. A polyvinyl halide molding material, containing from 0.1 to 30 % by weight of a two-step emulsion copolymer as claimed in claim 1.

4. The use of a two-step emulsion copolymer as claimed in claim 1 as a processing aid for polyvinyl halide molding materials.

5. The use of a two-step emulsion copolymer as claimed in claim 1 as a processing aid for polyvinyl halide molding materials in calendering.

6. A molding obtainable from a thermoplastic molding material as claimed in claim 2 or 3.

7. A molding obtainable using an emulsion copolymer as a processing aid as claimed in claim 5 or 6.

## Claims (Claims for the following Contracting State(s): ES)

1. A process for the preparation of a two-step emulsion copolymer by
A) emulsion polymerization of from 31 to 65 % by weight of a monomer mixture comprising
a1) from 40 to 80 % by weight of a C₁-C₁₈-alkyl acrylate,
a2) from 20 to 60 % by weight of methyl methacrylate and
a3) from 0 to 20 % by weight of a further, non-crosslinking comonomer, and
B) subsequent emulsion polymerization, in the presence of the emulsion copolymer obtained in A), of from 35 to 69 % by weight of a monomer mixture comprising
b1) from 25 to 90 % by weight of a C₁-C₄-alkyl methacrylate,
b2) from 10 to 75 % by weight of a vinylaromatic monomer and
b3) from 0 to 65 % by weight of a further, non-crosslinking comonomer,
the percentages by weight of the monomer mixtures employed in steps A) and B) being based on the emulsion copolymer and adding up to 100 % by weight.

2. The use of a two-step emulsion copolymer as claimed in claim 1 as a processing aid for polyvinyl halide molding materials.

3. The use of a two-step emulsion copolymer as claimed in claim 1 as a processing aid for polyvinyl halide molding materials in calendering.

## Revendications (Revendications pour l'(les) Etat(s) contractant(s) suivant(s): BE, DE, FR, GB, IT, NL)

1. Copolymère préparé en émulsion en deux étapes, obtenu par
A) polymérisation en émulsion de 31 à 65 % en poids d'un mélange de monomères composé de
a₁) 40 à 80°% en poids d'un acrylate d'alkyle en C₁-C₁₈,
a₂) 20 à 60% en poids de méthacrylate de méthyle et
a₃) 0 à 20% en poids d'un autre comonomère non réticulant, puis
B) polymérisation en émulsion, en présence du produit de copolymérisation en émulsion obtenu dans l'étape A), de 35 à 69% en poids d'un mélange de monomères composé de
b₁) 25 à 90% en poids d'un méthacrylate d'alkyle en C₁-C₄,
b₂) 10 à 75% en poids d'un monomère vinylaromatique et
b₃) 0 à 65% en poids d'un autre comonomère non réticulant,
les pourcentages en poids des mélanges de monomères mis en réaction dans les étapes A) et B) se rapportant au produit de copolymérisation en émulsion et s'additionnant à 100% en poids.

2. Masses à mouler thermoplastiques, contenant de 0,1 à 30% en poids du copolymère préparé en émulsion en deux étapes selon la revendication 1.

3. Masses à mouler de polyhhalogénure de vinyle), contenant de 0,1 à 30% en poids du copolymère préparé en émulsion en deux étapes selon la revendication 1,

4. Utilisation du copolymère préparé en émulsion en deux étapes selon la revendication 1 comme adjuvant de mise en oeuvre pour des masses à mouler de poly(halogénure de vinyle).

5. Utilisation du copolymère préparé en émulsion en deux étapes selon la revendication 1 comme adjuvant de mise en oeuvre pour des masses à mouler de poly(halogénure de vinyle) au cours du calandrage.

6. Pièces moulées obtenues à partir de masses à mouler thermoplastiques selon la revendication 2 ou 3.

7. Pièces moulées obtenues en utilisant le produit de copolymérisation en émulsion comme adjuvant de mise en oeuvre selon la revendication 5 ou 6.

## Revendications (Revendications pour l'(les) Etat(s) contractant(s) suivant(s): ES)

1. Procédé de préparation d'un produit de copolymérisation en émulsion en deux étapes par
A) polymérisation en émulsion de 31 à 65% en poids d'un mélange de monomères composé de
a₁) 40 à 80% en poids d'un acrylate d'alkyle en C₁-C₁₈,
a₂) 20 à 60% en poids de méthacrylate de méthyle et
a₃) 0 à 20% en poids d'un autre comonomère non réticulant, puis
B) polymérisation en émulsion, en présence du produit de copolymérisation en émulsion obtenu dans l'étape A), de
35 à 69% en poids d'un mélange de monomères composé de
b₁) 25 à 90°% en poids d'un méthacrylate d'alkyle en C₁₋C₄,
b₂) 10 à 75% en poids d'un monomère vinylaromatique et
b₃) 0 à 65*%* en poids d'un autre comonomère non réticulant,
les pourcentages en poids des mélanges de monomères mis en réaction dans les étapes A) et B) se rapportant au produit de copolymérisation en émulsion et s'additionnant à 100% en poids.

2. Utilisation du copolymère préparé en émulsion en deux étapes selon la revendication 1 comme adjuvant de mise en oeuvre pour des masses à mouler de poly(halogénure de vinyle).

3. Utilisation du copolymère préparé en émulsion en deux étapes selon la revendication 1 comme adjuvant de mise en oeuvre pour des masses à mouler de poly(halogénure de vinyle) au cours du calandrage.
